# EUROPEAN PATENT SPECIFICATION

(11) **EP 3 064 723 B1**
(45) Date of publication and mention of the grant of the patent: **13.06.2018**
(21) Application number: 16157994.1
(22) Date of filing: 01.03.2016
(51) Int. Cl.: F01N 3/04, F01N 3/10, F01N 13/00, F01N 13/10, F01N 13/18

(54) **OUTBOARD MOTOR**
AUSSENBORDMOTOR
MOTEUR HORS-BORD

(30) Priority: 02.03.2015 JP 2015040508; 17.03.2015 JP 2015053696
(43) Date of publication of application: 07.09.2016
(73) Proprietor: Yamaha Hatsudoki Kabushiki Kaisha, Iwata-shi, Shizuoka 438-8501 (JP)
(72) Inventor: NAKAYAMA, Koichi, Iwata-shi, Shizuoka 438-8501 (JP); NOSE, Yukinori, Iwata-shi, Shizuoka 438-8501 (JP)
(74) Representative: Grünecker Patent- und Rechtsanwälte PartG mbB

(56) References cited:
- EP-A1- 1 429 059
- EP-A2- 2 594 760
- US-A1- 2010 041 287
- US-A1- 2013 130 576
- US-A1- 2014 242 858

## Description

The present invention relates to an outboard motor that can be used to propel a vessel.

EP2 594 760 A2 discloses an engine includes an engine which includes a cylinder block including a plurality of cylinders disposed along a V-shaped line, a pair of exhaust manifolds disposed inside the V-shaped line, and an exhaust pipe disposed inside the V-shaped line. Each of the pair of exhaust manifolds includes a first passage that includes a plurality of inflow ports into which exhaust gases from the cylinders flow, a collecting portion at which exhaust gases are collected, and an exhaust port from which exhaust gases are discharged. The exhaust pipe includes a connection passage that includes a pair of intermediate inflow ports that are connected to the exhaust ports, at least one intermediate exhaust port from which exhaust gases are discharged. The connection passage is arranged to connect the pair of intermediate inflow ports and the at least one intermediate exhaust port.
US 2014322997 A1 discloses an outboard motor powered by a V-type six-cylinder engine. This outboard motor is equipped with an in-bank exhaust system that discharges exhaust gases to the inside of two cylinder banks.

The exhaust device of the engine includes exhaust passages the number of which changes in order of 6-2-1-2-1. In detail, three exhaust ports corresponding to the right cylinder bank join together at the right exhaust manifold, and three exhaust ports corresponding to the left cylinder bank join together at the left exhaust manifold. The two passages provided in the two exhaust manifolds join together at the upstream portion of the exhaust pipe, and are branched into two at the downstream portion of the exhaust pipe. The two branch passages branched at the downstream portion of the exhaust pipe pass through two cylinder heads, and join together at the cylinder body. Thereafter, the exhaust passage passes through the exhaust guide and extends from the cylinder body to the propeller.

However, in the outboard motor disclosed in US 2014322997 A1, since the exhaust passage is branched and then join together again, a pressure loss of exhaust gases, that is, resistance applied to the exhaust gases increases. This causes a decrease in engine output and deterioration of fuel consumption.

For example, if one of the two branch passages is closed, branching and joining together again of the exhaust passage are eliminated. However, in this case, since exhaust gases that should be discharged to the two branch passages are discharged to only one branch passage, the pressure loss of the exhaust gases increases due to a decrease in flow passage area. In addition, since the branch passages are provided in the cylinder head and the cylinder body, the flow passage area of the branch passages cannot be significantly increased while preventing influences on other portions.

An object of the present invention is to provide an outboard motor that can prevent a decrease in engine output and deterioration of fuel consumption due to an increase in exhaust resistance. This object is achieved by the outboard motor of Claim 1. Preferred embodiments are laid down in the dependent claims.

A preferred embodiment provides an outboard motor including an engine that includes a V-shaped cylinder body disposed along a V-shaped line defined by a first plane passing through centerlines of a plurality of first cylinders and a second plane passing through centerlines of a plurality of second cylinders, and two cylinder heads defining a plurality of combustion chambers, and an exhaust passage that discharges exhaust gases generated in the engine into water from an exhaust opening.

The exhaust passage includes a plurality of first branch passages that are connected to the plurality of first cylinders, respectively, and disposed inside the V-shaped line, a plurality of second branch passages that are connected to the plurality of second cylinders, respectively, and disposed inside the V-shaped line, a first upstream collecting passage connected to each of the plurality of first branch passages, a second upstream collecting passage connected to each of the plurality of second branch passages, and a downstream collecting passage which includes an upstream end connected to each of the first upstream collecting passage and the second upstream collecting passage, and a downstream end connected to the exhaust opening that is provided in a propeller which is configured to be disposed in water, and in which the downstream collecting passage from the upstream end to the downstream end is disposed outside the cylinder heads.

With this arrangement, exhaust gases generated in the plurality of first cylinders are discharged to the plurality of first branch passages disposed inside the V-shaped line, and flow from each of the first branch passages to the first upstream collecting passage. Similarly, exhaust gases generated in the plurality of second cylinders are discharged to the plurality of second branch passages disposed inside the V-shaped line, and flow from each of the second branch passages to the second upstream collecting passage. The exhaust gases inside the first and second upstream collecting passages flow into the inside of the downstream collecting passage through the upstream end of the downstream collecting passage positioned at the junction of the first and second upstream collecting passages, and discharged from the downstream collecting passage through the downstream end of the downstream collecting passage positioned at the exhaust opening.

Thus, the first upstream collecting passage and the second upstream collecting passage are connected respectively to the exhaust opening of the exhaust passage by one downstream collecting passage, so that a pressure loss of exhaust gases due to branching of the exhaust passage is reduced. Further, a portion from the upstream end of the downstream collecting passage to the downstream end of the downstream collecting passage is disposed outside the cylinder heads, so that the flow passage area of the downstream collecting passage increases without being constrained by the cylinder heads. Accordingly, the engine output and fuel consumption are improved.

The outboard motor may further include a catalyst disposed in the downstream collecting passage. Exhaust gases generated in each cylinder are collected at the downstream collecting passage. The catalyst that purifies exhaust gases is disposed in the downstream collecting passage. Therefore, exhaust gases generated in all cylinders are treated with one catalyst.

The catalyst may be disposed inside the V-shaped line. With this arrangement, a portion of the downstream collecting passage is disposed inside the V-shaped line, and the catalyst is disposed in the portion of the downstream collecting passage. As compared with the case where the catalyst is disposed outside the V-shaped line, the widths of the engine and catalyst is reduced.

The catalyst may be disposed at a height lower than an upper end of the plurality of first cylinders and higher than a lower end of the plurality of first cylinders.

With this arrangement, the catalyst is disposed at a height between the upper end of the plurality of first cylinders and the lower end of the plurality of first cylinders. Since the catalyst is thus disposed near the engine, high-temperature exhaust gases pass through the catalyst Therefore, when starting the engine, the temperature of the catalyst is raised to a temperature at which the catalyst is highly active in a short period of time. Further, the catalyst is disposed at the high position, even if water flows back inside the exhaust passage, water hardly reaches the catalyst.

The engine may further include a crankshaft rotatable around a rotation axis extending in the up-down direction. The downstream collecting passage may include an approaching portion that approaches the crankshaft while extending downstream with respect to a flow direction of exhaust gases.

The outboard motor may further include a cooling water passage that guides cooling water to cool the outboard motor, and a first exhaust pipe and a second exhaust pipe that define portions of the downstream collecting passage and include connecting portions that are connected to each other. The cooling water passage may include a first water passage provided in the first exhaust pipe and a second water passage provided in the second exhaust pipe. The first water passage and the second water passage may be connected to each other at the connecting portions of the first exhaust pipe and the second exhaust pipe.

With this arrangement, the first water passage and the second water passage of the cooling water passage are provided in the first exhaust pipe and the second exhaust pipe that define portions of the downstream collecting passage. Therefore, the first exhaust pipe and the second exhaust pipe that guide high-temperature exhaust gases are cooled by the cooling water. Further, the first water passage and the second water passage are connected to each other by the connecting portion between the first exhaust pipe and the second exhaust pipe, so that between these, cooling water is distributed. Therefore, a plurality of members including the first exhaust pipe and the second exhaust pipe are cooled by the same cooling water.

The outboard motor may further include a water pump that feeds cooling water into the cooling water passage. The cooling water passage may extend from the water pump to the engine via the exhaust passage.

With this arrangement, the cooling water suctioned into the water pump is guided from the water pump into the exhaust passage by the cooling water passage, and then guided from the exhaust passage to the engine by the cooling water passage. That is, the exhaust passage is cooled by the cooling water before cooling the cylinder heads, etc. The members defining the exhaust passage normally have heat capacity smaller than that of the engine. Therefore, by supplying cooling water having low temperature to the exhaust passage, an increase in temperature of the exhaust passage is reduced.

The outboard motor may further include an engine support member that supports the cylinder body of the engine. In this case, the engine support member may define the portion of the downstream collecting passage. Alternatively, the portion from the upstream end to the downstream end of the downstream collecting passage may be disposed outside the engine support member.

The outboard motor may further include an oil pan disposed below the engine. In this case, the portion from the upstream end to the downstream end of the downstream collecting passage may be disposed outside the oil pan.

The outboard motor may further include a first exhaust manifold that defines a portion of the exhaust passage, and is connected to the plurality of first cylinders and disposed inside the V-shaped line, a second exhaust manifold that defines a portion of the exhaust passage, and is connected to the plurality of second cylinders and disposed inside the V-shaped line, an exhaust pipe that includes a first upstream end portion into which exhaust gases discharged from the plurality of first cylinders to the first exhaust manifold flow, and a second upstream end portion into which exhaust gases discharged from the plurality of second cylinders to the second exhaust manifold flow, and defines a portion of the exhaust passage, and a spiral wound gasket that seals a gap between the first exhaust manifold and the first upstream end portion.

The outboard motor may further include a fixing member that maintains constant a distance between the second exhaust manifold and the second upstream end portion by fixing the second upstream end portion to the second exhaust manifold.

The first upstream end portion may be separated from the first exhaust manifold in the entire region of the first upstream end portion.

The outboard motor may further include an inner cylinder portion provided in one of the first exhaust manifold and the first upstream end portion. The spiral wound gasket may surround the inner cylinder portion.

The inner cylinder portion surrounded by the spiral wound gasket may include a solid portion that fills a range from an inner peripheral surface of the inner cylinder portion to an outer peripheral surface of the inner cylinder portion across the entire circumference of the inner cylinder portion.

The outboard motor may further include a spring and a bolt that fastens the first exhaust manifold and the first upstream end portion via the spring.

The outboard motor may further include a cooling water pipe that guides cooling water between a water passage provided in the first exhaust manifold and a water passage provided in the exhaust pipe. In this case, the cooling water pipe may be disposed around the spiral wound gasket.

The outboard motor may further include an O-ring that seals a gap between an outer peripheral surface of the cooling water pipe and one of the first exhaust manifold and the exhaust pipe. Alternatively, the outboard motor may further include an O-ring that seals a gap between an end surface of the cooling water pipe in an axial direction of the cooling water pipe and one of the first exhaust manifold and the exhaust pipe.

The exhaust pipe may further include a collecting portion into which exhaust gases that flowed in the first upstream end portion and exhaust gases that flowed in the second upstream end portion flow. In this case, the outboard motor may further include a catalyst disposed in the collecting portion of the exhaust pipe.

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a schematic view showing a left side surface of an outboard motor according to a preferred embodiment.
Fig. 2 is a partial sectional view showing a horizontal section of an engine.
Fig. 3 is a schematic view showing a left side surface of the engine.
Fig. 4 is a schematic view showing a back surface of the engine.
Fig. 5 is a sectional view showing a vertical section of a portion of an exhaust passage.
Fig. 6 is a sectional view showing a section of a connecting portion between a first exhaust pipe and a first exhaust manifold, taken along line VI-VI in Fig. 4.
Fig. 7 is a sectional view showing a section of a connecting portion between the first exhaust pipe and a second exhaust manifold, taken along line VII-VII in Fig. 4.
Fig. 8 is a conceptual diagram showing the entirety of the exhaust passage.
Fig. 9 is a conceptual diagram showing the entirety of an exhaust passage according to another preferred embodiment.
Fig. 10 is a sectional view showing a section of a spiral wound gasket according to still another preferred embodiment.
Fig. 11 is a sectional view showing a section of a connecting portion between a first exhaust pipe and a first exhaust manifold according to still another preferred embodiment.

### DETAILED DESCRIPTION OF THE PREFERRED EMBODIMENTS

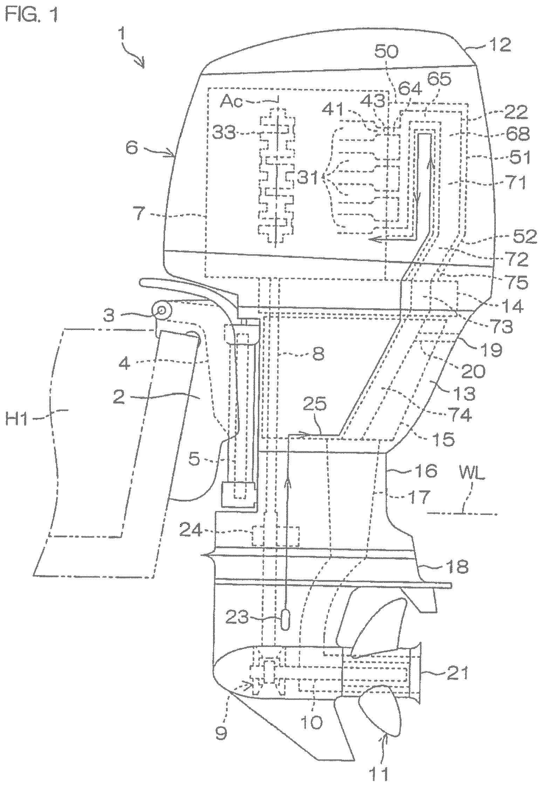

Fig. 1 is a schematic view showing a left side surface of an outboard motor 6 according to a preferred embodiment.

A vessel propulsion apparatus 1 includes a clamp bracket 2 attachable to the rear portion (stern) of a hull H1, and an outboard motor 6 supported by the clamp bracket 2 via a tilting shaft 3, a swivel bracket 4, and a steering shaft 5. The outboard motor 6 is turnable with respect to the clamp bracket 2 around the centerline of the steering shaft 5 extending in the up-down direction, and turnable with respect to the clamp bracket 2 around the centerline of the tilting shaft 3 extending in the right-left direction.

The outboard motor 6 includes an engine 7 that is an example of an internal combustion that generates power to rotate a propeller 11, and a power transmission system that transmits the power of the engine 7 to the propeller 11. The power transmission system includes a drive shaft 8, a forward-reverse switching mechanism 9, and a propeller shaft 10. Rotation of the engine 7 is transmitted to the propeller shaft 10 via the drive shaft 8 and the forward-reverse switching mechanism 9. The direction of rotation to be transmitted from the drive shaft 8 to the propeller shaft 10 is switched by the forward-reverse switching mechanism 9. The propeller 11 rotates around the centerline of the propeller shaft 10 together with the propeller shaft 10.

The outboard motor 6 includes an engine cowling 12 covering the engine 7, and a casing 13 housing the power transmission system. The casing 13 includes an exhaust guide 14 disposed below the engine 7, an upper case 16 disposed below the exhaust guide 14, and a lower case 18 disposed below the upper case 16. The casing 13 further includes an oil pan 15 that stores lubrication oil to be supplied to movable portions such as the engine 7, and a tubular muffler 17 disposed inside the upper case 16. The exhaust guide 14, serving as an engine support member, supports the engine 7 in a posture in which the rotation axis Ac of the crankshaft 33 extends in the up-down direction.

The outboard motor 6 includes an exhaust passage 22 that guides exhaust gases of the engine 7 to an exhaust opening 21 disposed below a waterline WL (a height of a water surface when a vessel equipped with the vessel propulsion apparatus 1 stops). The exhaust passage 22 extends from the engine 7 to the propeller 11. The exhaust passage 22 passes through the insides of the exhaust guide 14, the oil pan 15, the muffler 17, and the lower case 18, and opens at a rear end portion of the propeller 11. The rear end portion of the propeller 11 defines the exhaust opening 21 that opens in water.

The outboard motor 6 further includes an idle exhaust passage 20 that guides exhaust gases of the engine 7 to an idle exhaust opening 19 disposed above the waterline WL. An upstream end of the idle exhaust passage 20 is connected to the exhaust passage 22 at a position lower than the engine 7. The idle exhaust passage 20 extends rearward from the exhaust passage 22 to the idle exhaust opening 19. The idle exhaust opening 19 opens at an outer surface of the outboard motor 6. An opening area of the idle exhaust opening 19 is smaller than that of the exhaust opening 21.

Exhaust gases generated in the engine 7 are guided toward the exhaust opening 21 by the exhaust passage 22. When the output of the engine 7 is high, exhaust gases inside the exhaust passage 22 are mainly discharged into water from the exhaust opening 21. Further, a portion of the exhaust gases inside the exhaust passage 22 is guided to the idle exhaust opening 19 by the idle exhaust passage 20, and released to the atmosphere from the idle exhaust opening 19. On the other hand, when the output of the engine 7 is low (for example, during idling), the exhaust gas pressure inside the exhaust passage 22 is low, so that the exhaust gases inside the exhaust passage 22 are mainly released to the atmosphere from the idle exhaust opening 19.

The outboard motor 6 includes a water inlet 23 that opens at an outer surface of the outboard motor 6, a water pump 24 that takes water as cooling water outside the outboard motor 6 from the water inlet 23 into the inside of the outboard motor 6, and a cooling water passage 25 that guides water suctioned in the water inlet 23 to the respective portions of the outboard motor 6. The water pump 24 to be driven by the engine 7 is disposed in the cooling water passage 25 provided inside the outboard motor 6. The cooling water passage 25 extends from the water inlet 23 to the exhaust passage 22, and extends from the exhaust passage 22 to the engine 7. Cooling water inside the cooling water passage 25 cools members defining the exhaust passage 22, such as the oil pan 15, and then cools the engine 7. The cooling water supplied to the water jacket of the engine 7 is guided to the outside of the outboard motor 6 by the cooling water passage 25.

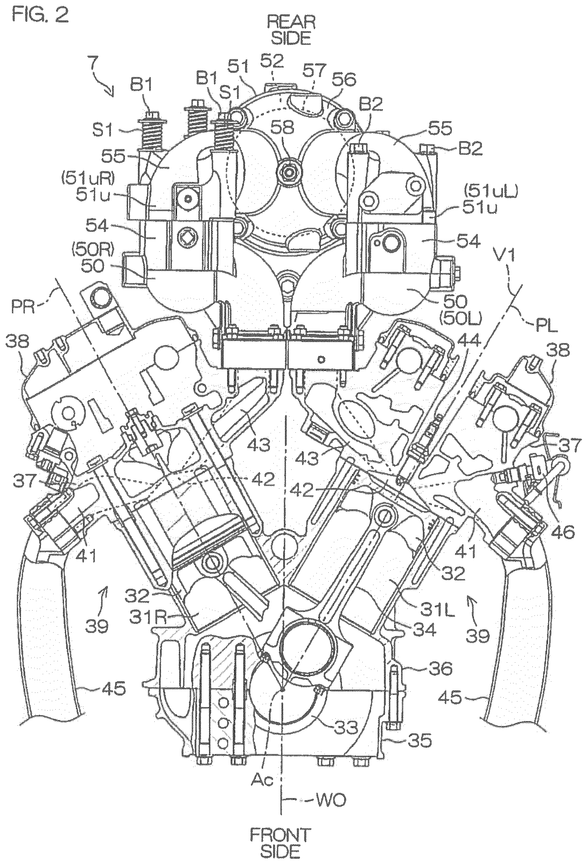

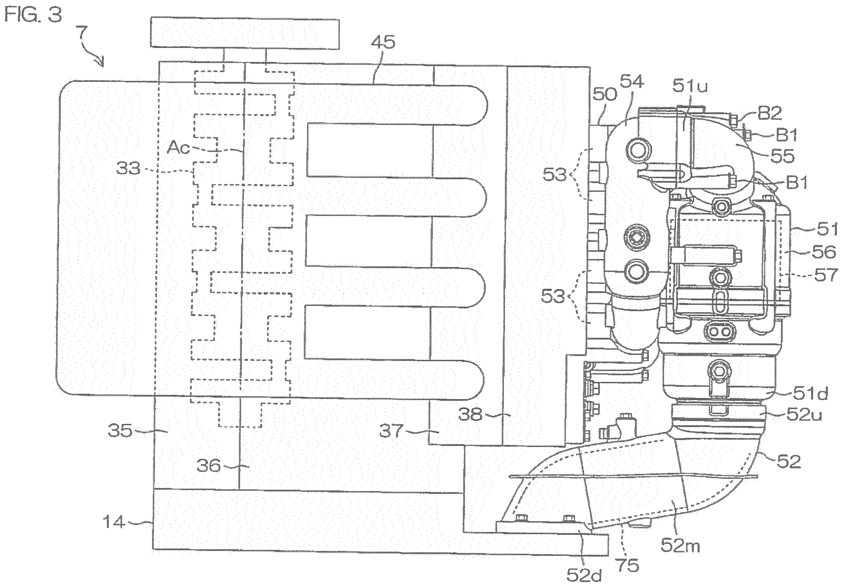

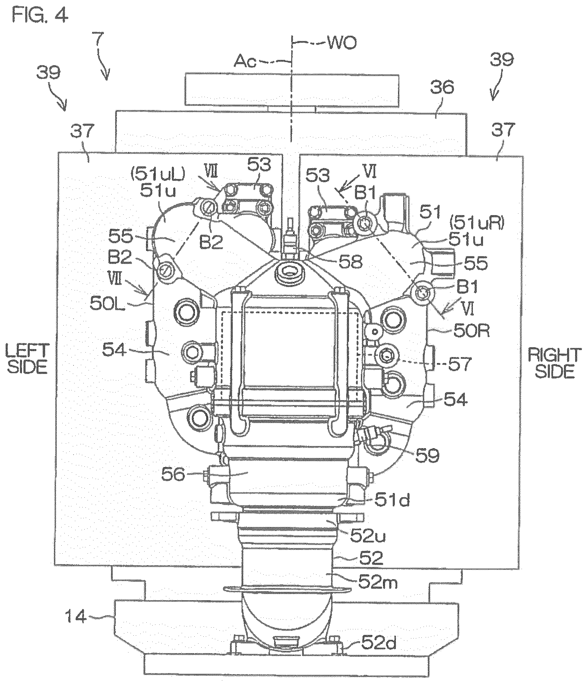

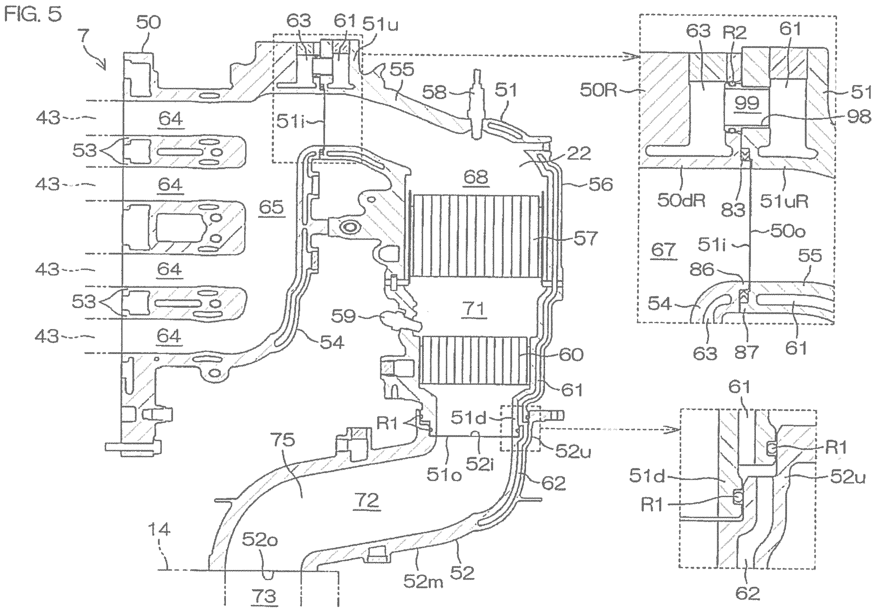

Fig. 2 is a partial sectional view showing a horizontal section of the engine 7. Fig. 3 is a schematic view showing a left side surface of the engine 7. Fig. 4 is a schematic view showing a back surface of the engine 7. Fig. 5 is a sectional view showing a vertical section of a portion of the exhaust passage 22.

Fig. 2 shows a section that differs in height between the right side and the left side of a center WO (vertical surface that passes through the rotation axis Ac of the crankshaft 33 and is perpendicular to the right-left direction) of the outboard motor 6. In Fig. 3 and Fig. 4, components other than the exhaust manifold 50, the first exhaust pipe 51, and the second exhaust pipe 52, etc., are omitted or simplified.

The engine 7 is, for example, a V-type eight-cylinder four-cycle engine. As shown in Fig. 2, the engine 7 includes a plurality of pistons 32 disposed inside a plurality of cylinders 31, respectively, a crankshaft 33 rotatable around a rotation axis Ac extending in the up-down direction, and a plurality of connecting rods 34 that join the plurality of pistons 32 to the crankshaft 33.

As shown in Fig. 2, the engine 7 includes two cylinder banks 39 provided with the plurality of cylinders 31, and a crankcase 35 attached to the respective cylinder banks 39. The two cylinder banks 39 include a cylinder body 36 having a V-shaped configuration that opens rearward in a plain view of the engine 7, two cylinder heads 37 attached to two rear end portions of the cylinder body 36, respectively, and two head covers 38 attached to the two cylinder heads 37, respectively.

The two cylinder banks 39 are disposed on the right side and the left side of the center WO of the outboard motor 6, respectively. The centerlines of the four cylinders 31 aligned in the right cylinder bank 39 are disposed in a first plane PR parallel or substantially parallel to the rotation axis Ac. The centerlines of the four cylinders 31 aligned in the left cylinder bank 39 are disposed in a second plane PL parallel or substantially parallel to the rotation axis Ac. The first plane PR and the second plane PL are symmetrical or substantially symmetrical about the center WO of the outboard motor 6, and are disposed in a V-shape manner in a plain view of the engine 7. A V-shaped line V1 is defined by the first plane PR and the second plane PL, and extends rearward from the rotation axis Ac.

Hereinafter, "first" and "R" may be attached to the head and the end of "element corresponding to the right cylinder bank 39," respectively, and "second" and "L" may be attached to the head and the end of "element corresponding to the left cylinder bank 39," respectively. For example, "cylinder 31 corresponding to the right cylinder bank 39" may be referred to as "first cylinder 31R," and "cylinder 31 corresponding to the left cylinder bank 39" may be referred to as "second cylinder 31L."

As shown in Fig. 2, the cylinder body 36 extends along the V-shaped line V1 in a plain view. The cylinder body 36 defines a plurality of cylinders 31 together with two cylinder heads 37. The two cylinder heads 37 are disposed behind the cylinder body 36, and the crankcase 35 is disposed in front of the cylinder body 36. The crankshaft 33 is disposed inside a housing space defined by the crankcase 35 and the cylinder body 36. As shown in Fig. 3, the crankcase 35 and the cylinder body 36 are disposed on the exhaust guide 14.

As shown in Fig. 2, the two cylinder heads 37 include a plurality of combustion chambers 42 corresponding to the plurality of cylinders 31, respectively, a plurality of intake ports 41 that supply air to the plurality of combustion chambers 42, and a plurality of exhaust ports 43 that discharge exhaust gases generated in the plurality of combustion chambers 42. The engine 7 includes a plurality of ignition plugs 44 that burn an air-fuel mixture in the plurality of combustion chambers 42, a plurality of intake valves that open and close the plurality of intake ports 41, a plurality of exhaust valves that open and close the plurality of exhaust ports 43, and a valve mechanism that moves the pluralities of intake valves and exhaust valves.

The region between the V-shaped line V1 in the right-left direction is the inside of the V-shaped line V1, and the right and left regions of the V-shaped line V1 are the outside of the V-shaped line V1. The intake ports 41 are disposed outside the V-shaped line V1, and the exhaust ports 43 are disposed inside the V-shaped line V1. The plurality of intake ports 41 are connected to the plurality of combustion chambers 42, respectively, and the plurality of exhaust ports 43 are connected to the plurality of combustion chambers 42, respectively.

An intake system of the engine 7 includes two intake manifolds 45 that supply air to the plurality of combustion chambers 42 via the plurality of intake ports 41. A fuel supply system of the engine 7 includes a fuel injector 46 that supplies fuel to the plurality of combustion chambers 42. An exhaust system of the engine 7 includes two exhaust manifolds 50 that discharge exhaust gases generated in the plurality of combustion chambers 42 from the plurality of combustion chambers 42 via the plurality of exhaust ports 43, and a first exhaust pipe 51 connected to the two exhaust manifolds 50. As shown in Fig. 3 and Fig. 4, the exhaust system of the engine 7 further includes a second exhaust pipe 52 connected to the first exhaust pipe 51.

As shown in Fig. 2, the intake manifolds 45 and the fuel injector 46 are disposed outside the V-shaped line V1. The exhaust manifolds 50, the first exhaust pipe 51, and the second exhaust pipe 52 are disposed inside the V-shaped line V1. The two exhaust manifolds 50 are disposed behind the two cylinder heads 37, respectively. The two exhaust manifolds 50 are members independent from each other, and are arranged side by side in the right-left direction. The first exhaust pipe 51 is disposed behind the two exhaust manifolds 50.

As shown in Fig. 3 and Fig. 4, the second exhaust pipe 52 is disposed below the first exhaust pipe 51. The second exhaust pipe 52 extends from the first exhaust pipe 51 to the exhaust guide 14. The exhaust manifolds 50 and the first exhaust pipe 51 are disposed higher than the exhaust guide 14. The second exhaust pipe 52 is separated from the engine main body including the cylinder heads 37 and the cylinder body 36.

The two exhaust manifolds 50 are fixed to the two cylinder heads 37 by a plurality of bolts, respectively. The two upstream end portions 51u of the first exhaust pipe 51 are joined to the two exhaust manifolds 50 by a plurality of bolts, respectively. The upstream end portion 52u of the second exhaust pipe 52 is joined to the downstream end portion 51d of the first exhaust pipe 51 via two O-rings R1 (refer to Fig. 5). The downstream end portion 52d of the second exhaust pipe 52 is fixed to the exhaust guide 14 by a plurality of bolts.

As shown in Fig. 5, each of the two exhaust manifolds 50 includes a plurality of upstream branch portions 53 connected to the plurality of exhaust ports 43, and an upstream collecting portion 54 connected to the respective upstream branch portions 53. As shown in Fig. 4, the first exhaust pipe 51 includes two downstream branch portions 55 connected to the two upstream collecting portions 54, respectively, and a downstream collecting portion 56 connected to the respective downstream branch portions 55. The second exhaust pipe 52 includes an upstream end portion 52u connected to the downstream collecting portion 56, and a downstream end portion 52d connected to the exhaust guide 14. As shown in Fig. 3, the second exhaust pipe 52 further includes a midstream portion 52m extending toward the crankshaft 33 from the upstream end portion 52u of the second exhaust pipe 52 to the downstream end portion 52d of the second exhaust pipe 52 in a side view.

As shown in Fig. 5, an inlet 51i of the first exhaust pipe 51 is disposed higher than an outlet 51o of the first exhaust pipe 51. The outlet 51o of the first exhaust pipe 51 is positioned below a catalyst 57. A diameter of the outlet 51o of the first exhaust pipe 51 is larger than a diameter of the inlet 51i of the first exhaust pipe 51. A diameter of an inlet 52i of the second exhaust pipe 52 and a diameter of an outlet 52o of the second exhaust pipe 52 are larger than the diameter of the inlet 51i of the first exhaust pipe 51. The inlet 52i of the second exhaust pipe 52 is disposed further to the rear than the exhaust guide 14. The outlet 52o of the second exhaust pipe 52 is disposed above the exhaust guide 14.

The engine 7 includes the catalyst 57 disposed inside the exhaust passage 22, an upstream sensor 58 that measures an exhaust gas concentration at a position further upstream than the catalyst 57, and a downstream sensor 59 that measures an exhaust gas concentration at a position further downstream than the catalyst 57. The engine 7 further includes a water-resistant member 60 disposed inside the exhaust passage 22 at a position further downstream than the downstream sensor 59. The catalyst 57, the upstream sensor 58, the downstream sensor 59, and the water-resistant member 60 are held by the first exhaust pipe 51.

The catalyst 57 is, for example, a three-way catalyst. The catalyst 57 is disposed in a catalyst housing portion provided in the downstream collecting portion 56 of the first exhaust pipe 51. The catalyst 57 is disposed inside a downstream collecting passage 68 of the exhaust passage 22 described later. An outer peripheral portion of the catalyst 57 surrounds the centerline of the exhaust passage 22, and is preferably concentric with the exhaust passage 22. The catalyst 57 includes a honeycomb carrier inside which exhaust gases pass through and a catalytic material held on the surface of the carrier.

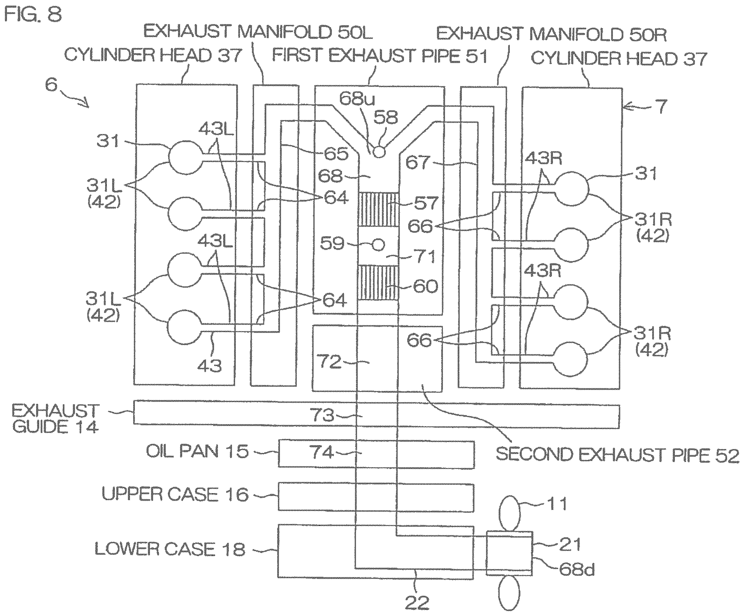

The catalyst 57 is disposed higher than the exhaust guide 14. The catalyst 57 is disposed at a height lower than the upper end of the plurality of first cylinders 31R and higher than the lower end of the plurality of first cylinders 31R (refer to Fig. 8). The water-resistant member 60 is disposed below the catalyst 57. The upstream sensor 58 is disposed above the catalyst 57, and the downstream sensor 59 is disposed at a height between the catalyst 57 and the water-resistant member 60. Tip end portions of the upstream sensor 58 and the downstream sensor 59 project inward from an inner surface of the first exhaust pipe 51.

Each of the upstream sensor 58 and the downstream sensor 59 are oxygen concentration sensors that detect an oxygen concentration in exhaust gases. Exhaust gases flowing in the exhaust passage 22 come into contact with the tip end portions of the upstream sensor 58 and the downstream sensor 59. The upstream sensor 58 detects an oxygen concentration in exhaust gases before being purified by the catalyst 57, and the downstream sensor 59 detects an oxygen concentration in exhaust gases after being purified by the catalyst 57. An air-fuel ratio of the air-fuel mixture to be supplied to the combustion chambers 42 is controlled by an engine control system based on detection values of the upstream sensor 58 and the downstream sensor 59, etc.

The exhaust opening 21 defined by the propeller 11 is disposed in water, so that water enters the inside of the exhaust passage 22 through the exhaust opening 21. When the pressure inside the combustion chambers 42 becomes negative (pressure lower than the atmospheric pressure), water inside the exhaust passage 22 may flow back in the exhaust passage 22 toward the combustion chambers 42. The water-resistant member 60 has a honeycomb shape that allows gases to pass through and blocks distribution of liquids. Therefore, even if water inside the exhaust passage 22 reaches the water-resistant member 60, a back flow of the water is blocked by the water-resistant member 60. Accordingly, an amount of water that moves to a position further upstream than the water-resistant member 60 is reduced, and the catalyst 57, the upstream sensor 58, and the downstream sensor 59 are prevented from getting wet.

The tubular downstream end portion 51d of the first exhaust pipe 51 and the tubular upstream end portion 52u of the second exhaust pipe 52 are joined by fitting. Fig. 5 shows an example in which the downstream end portion 51d of the first exhaust pipe 51 is inserted inside the upstream end portion 52u of the second exhaust pipe 52. However, the upstream end portion 52u of the second exhaust pipe 52 may be inserted inside the downstream end portion 51d of the first exhaust pipe 51. A gap between the first exhaust pipe 51 and the second exhaust pipe 52 is sealed by two O-rings R1 spaced from each other in the axial direction of the exhaust passage 22. Accordingly, exhaust gases are prevented from leaking from the gap between the first exhaust pipe 51 and the second exhaust pipe 52.

The cooling water passage 25 includes a first water passage 61 provided in the first exhaust pipe 51, a second water passage 62 provided in the second exhaust pipe 52, and two third water passages 63 provided in the two exhaust manifolds 50. As shown in an enlarged manner in Fig. 5, the first water passage 61 opens at the downstream end portion 51d of the first exhaust pipe 51, and the second water passage 62 opens at the upstream end portion 52u of the second exhaust pipe 52. The downstream end portion 51d of the first exhaust pipe 51 and the upstream end portion 52u of the second exhaust pipe 52 define an annular sealed space surrounding the exhaust passage 22 together with the two O-rings R1. The opening of the first water passage 61 and the opening of the second water passage 62 are disposed in this sealed space.

The first water passage 61 is connected to the second water passage 62 by a connecting portion between the first exhaust pipe 51 and the second exhaust pipe 52. The first water passage 61 is further connected to the third water passage 63 by a connecting portion between the first exhaust pipe 51 and the first exhaust manifold 50R and connected to the third water passage 63 by a connecting portion between the first exhaust pipe 51 and the second exhaust manifold 50L. Cooling water fed by the water pump 24 (refer to Fig. 1) flows from the second water passage 62 to the first water passage 61, and flows from the first water passage 61 to the third water passages 63. Therefore, a plurality of members including the first exhaust pipe 51 and the second exhaust pipe 52 are cooled by the same cooling water. In addition, while the cooling water is prevented from leaking by the two O-rings R1, the cooling water is distributed between the first water passage 61 and the second water passage 62.

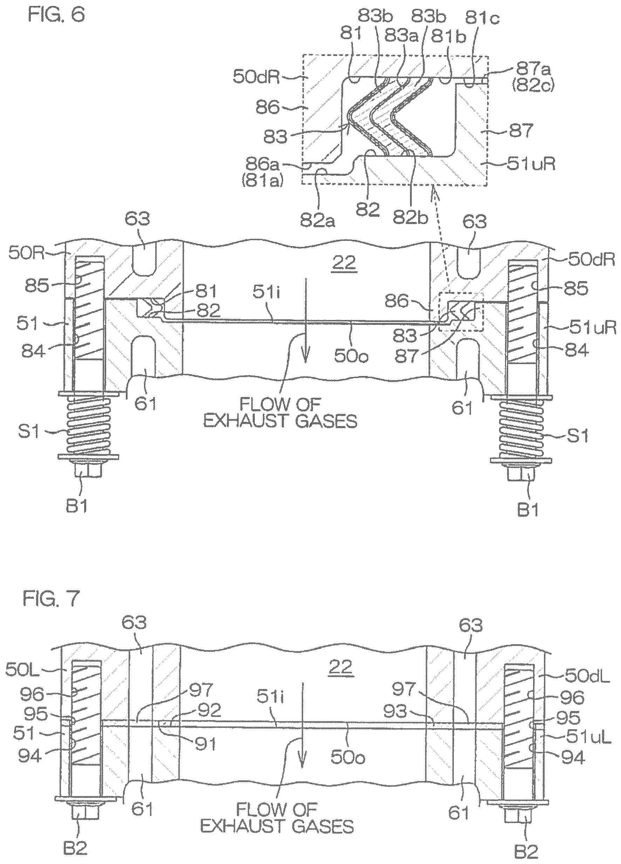

Fig. 6 is a sectional view showing a section of the connecting portion between the first exhaust pipe 51 and the first exhaust manifold 50R, taken along line VI-VI in Fig. 4. Fig. 7 is a sectional view showing a section of the connecting portion between the first exhaust pipe 51 and the second exhaust manifold 50L, taken along line VII-VII in Fig. 4.

As shown in Fig. 7, the second exhaust manifold 50L includes the second downstream end portion 50dL defining an exhaust gas outlet 50o. The first exhaust pipe 51 includes the second upstream end portion 51uL defining an exhaust gas inlet 50i. A plate-shaped sheet gasket 93 surrounding the exhaust passage 22 is disposed between a mating surface 92 of the second upstream end portion 51uL and a mating surface 91 of the second downstream end portion 50dL. Exhaust gases, discharged from the exhaust gas outlet 50o open at the mating surface 91 of the second downstream end portion 50dL, flow into the exhaust gas inlet 50i open at the mating surface 92 of the second upstream end portion 51uL.

The second upstream end portion 51uL of the first exhaust pipe 51 is fixed to the second downstream end portion 50dL of the second exhaust manifold 50L by a plurality of bolts B2. The second upstream end portion 51uL is unmovable with respect to the second downstream end portion 50dL. The bolts B2 are an example of a fixing member. Male screws of the bolts B2 pass through through holes 94 provided in the second upstream end portion 51uL and through holes 95 provided in the sheet gasket 93, and are attached to female screws 96 provided in the second downstream end portion 50dL. The sheet gasket 93 is sandwiched in the axial direction of the bolts B2 by the two mating surfaces 91 and 92. The distance between the two mating surfaces 91 and 92 is constant at any position.

On the other hand, as shown in Fig. 6, the first exhaust manifold 50R includes a first downstream end portion 50dR defining an exhaust gas outlet 50o. The first exhaust pipe 51 includes a first upstream end portion 51uR defining an exhaust gas inlet 50i. An annular spiral wound gasket 83 surrounding the exhaust passage 22 is disposed between a mating surface 82 of the first upstream end portion 51uR and a mating surface 81 of the first downstream end portion 50dR. Exhaust gases, discharged from the exhaust gas outlet 50o open at the mating surface 81 of the first downstream end portion 50dR, flow into the exhaust gas inlet 50i open at the mating surface 82 of the first upstream end portion 51uR.

The first upstream end portion 51uR of the first exhaust pipe 51 is fastened to the first downstream end portion 50dR of the first exhaust manifold 50R by a plurality of bolts B1 via a plurality of springs S1. Male screws of the bolts B1 pass through through holes 84 provided in the first upstream end portion 51uR and are attached to female screws 85 provided in the first downstream end portion 50dR. The plurality of bolts B1 are inserted into the plurality of springs S1, respectively. The springs S1 are interposed between the head portions of the bolts B1 and the back surface of the first upstream end portion 51uR. The springs S1 are compression coil springs. The springs S1 are compressed in the axial direction of the bolts B1 between the bolts B1 and the first upstream end portion 51uR.

The first upstream end portion 51uR is movable in the axial direction of the bolts B1 with respect to the first downstream end portion 50dR within an elastic region of the springs S1. When the first exhaust pipe 51, etc., expand or contract due to a temperature change, according to this, the springs S1 expand or contract. When the first upstream end portion 51uR is fastened to the first downstream end portion 50dR by the bolts B1, a tightening force that compresses the spiral wound gasket 83 in the axial direction is generated. Since the springs S1 are interposed between the bolts B1 and the first upstream end portion 51uR, even if the first exhaust pipe 51, etc., expand or contract, fluctuation of the tightening force is reduced.

As shown in an enlarged manner in Fig. 6, the spiral wound gasket 83 is a semimetal gasket including a hoop 83a made of a metal and a nonmetallic filler 83b. The hoop 83a and the filler 83b have thin belt shapes, and are spirally wound in a superposed state. An outer peripheral surface and an inner peripheral surface of the spiral wound gasket 83 are formed of metal members. The metal members may be portions of the hoop 83a, or may be members separate from the hoop 83a.

Sections of the hoop 83a and the filler 83b perpendicular to the circumferential direction of the spiral wound gasket 83 have V-shaped configurations open outward. The hoop 83a is made of a metal material such as stainless steel. The filler 83b is made of a nonmetallic material such as expanded graphite, inorganic paper, or a resin. The filler 83b is softer than the hoop 83a. The filler 83b is a seal that seals a gap between two mating surfaces. The hoop 83a is an elastic body supporting the filler 83b.

The spiral wound gasket 83 is softer than the sheet gasket 93 made of a material such as a metal or carbon fiber, and harder than O-rings made of a resin or rubber. In other words, a longitudinal elastic modulus (Young's modulus) of the entire spiral wound gasket 83 including the hoop 83a and the filler 83b is lower than a longitudinal elastic modulus of the sheet gasket 93, and higher than a longitudinal elastic modulus of the O-rings. The spiral wound gasket 83 has pressure resistance and heat resistance higher than those of the O-rings.

As shown in Fig. 6, the mating surface 81 of the first downstream end portion 50dR of the first exhaust manifold 50R includes an annular inner peripheral portion 81a, an annular intermediate portion 81b disposed further outside than the inner peripheral portion 81a, and an annular outer peripheral portion 81c disposed further outside than the intermediate portion 81b. The inner peripheral portion 81a is disposed at a position further downstream than the intermediate portion 81b. The inner peripheral portion 81a is equivalent to a tip end surface 86a of the inner peripheral portion 86 provided at the first downstream end portion 50dR. The intermediate portion 81b is equivalent to a seating surface that comes into contact with the spiral wound gasket 83. The intermediate portion 81b is disposed in the same plane as the outer peripheral portion 81c.

The mating surface 82 of the first upstream end portion 51uR of the first exhaust pipe 51 includes an annular inner peripheral portion 82a, an annular intermediate portion 82b disposed further outside than the inner peripheral portion 82a, and an annular outer peripheral portion 82c disposed further outside than the intermediate portion 82b. The inner peripheral portion 82a is disposed at a position further downstream than the intermediate portion 82b. The inner peripheral portion 82a may be disposed in the same plane as the intermediate portion 82b. The intermediate portion 82b is equivalent to a seating surface that comes into contact with the spiral wound gasket 83. The intermediate portion 82b is disposed at a position further downstream than the outer peripheral portion 82c. The outer peripheral portion 82c is equivalent to a tip end surface 87a of an outer cylinder portion 87 provided at the first upstream end portion 51 uR.

An inner peripheral surface of an inner cylinder portion 86 provided in the first exhaust manifold 50R defines a portion of the exhaust passage 22. The range from an inner peripheral surface of the inner cylinder portion 86 to an outer peripheral surface of the inner cylinder portion 86 is solid across the entire circumference of the inner cylinder portion 86. The spiral wound gasket 83 surrounds the inner cylinder portion 86. The spiral wound gasket 83 is blocked by the inner cylinder portion 86, and does not face the exhaust passage 22. An inner peripheral surface of the outer cylinder portion 87 provided in the first exhaust pipe 51 surrounds the spiral wound gasket 83. The spiral wound gasket 83 is disposed between the outer peripheral surface of the inner cylinder portion 86 and the inner peripheral surface of the outer cylinder portion 87. The male screws of the bolts B1 are disposed around the spiral wound gasket 83.

The spiral wound gasket 83 is sandwiched in the axial direction by the intermediate portion 82b of the first upstream end portion 51uR and the intermediate portion 81b of the first downstream end portion 50dR. The spiral wound gasket 83 is interposed between the first upstream end portion 51uR and the first downstream end portion 50dR, so that the first upstream end portion 51uR is separated from the first exhaust manifold 50R in the entire region of the first upstream end portion 51uR. In detail, a tip end surface 86a of the inner cylinder portion 86 is separated from the mating surface 82 of the first upstream end portion 51uR Similarly, a tip end surface 87a of the outer cylinder portion 87 is separated from the mating surface 81 of the first downstream end portion 50dR. The distance between the intermediate portion 81b and the intermediate portion 82b is larger than the distance from the tip end surface 86a of the inner cylinder portion 86 to the mating surface 82 of the first upstream end portion 51uR, and larger than the distance from the tip end surface 87a of the outer cylinder portion 87 to the mating surface 81 of the first downstream end portion 50dR.

When the spiral wound gasket 83 is sandwiched between the two mating surfaces 81 and 82 by a predetermined tightening force in the axial direction of the spiral wound gasket 83, the hoop 83a elastically deforms in the axial direction, and the filler 83b comes into close contact with the two mating surfaces 81 and 82. Accordingly, the gap between the two mating surfaces 81 and 82 is sealed by the filler 83b. Even if the distance between the two mating surfaces 81 and 82 increases or decreases, the state in which the filler 83b is in close contact with the two mating surfaces 81 and 82 is maintained by the elasticity of the hoop 83a supporting the filler 83b. That is, the spiral wound gasket 83 follows two mating surfaces 81 and 82 due to the elasticity of the hoop 83a. Therefore, even if the use conditions such as the tightening force rapidly change, excellent sealing performance is maintained.

The two cylinder heads 37 are fixed to the cylinder body 36. The first exhaust manifold 50R and the second exhaust manifold 50L are fixed to the two cylinder heads 37, respectively. The first upstream end portion 51uR of the first exhaust pipe 51 is joined to the first exhaust manifold 50R, and the second upstream end portion 51uL of the first exhaust pipe 51 is fixed to the second exhaust manifold 50L. The respective components of the engine 7 have dimensional tolerances, so that the position of the first exhaust pipe 51 with respect to the first exhaust manifold 50R and the second exhaust manifold 50L is not constant but varies by engine 7.

When both of the first upstream end portion 51 uR and the second upstream end portion 51uL are fixed to the first exhaust manifold 50R and the second exhaust manifold 50L, a gap caused by dimensional variation is generated between the first upstream end portion 51uR and the first downstream end portion 50dR or between the second upstream end portion 51uL and the second downstream end portion 50dL, and the sealing performance may deteriorate. Therefore, by interposing the elastically deformable spiral wound gasket 83 between the first upstream end portion 51uR and the first downstream end portion 50dR, a cumulative value of dimensional errors is absorbed. Accordingly, dimensional errors are absorbed while securing sealing performance.

As shown in Fig. 6, the first water passage 61 does not open at the mating surface 82 of the first upstream end portion 51uR, but is closed in the first upstream end portion 51uR. Similarly, the third water passage 63 does not open at the mating surface 81 of the first downstream end portion 50dR, but is closed in the first downstream end portion 50dR. Therefore, the first water passage 61 and the third water passage 63 are divided by the two mating surfaces 81 and 82.

On the other hand, as shown in Fig. 7, the first water passage 61 opens at the mating surface 92 of the second upstream end portion 51uL. Similarly, the third water passage 63 opens at the mating surface 91 of the second downstream end portion 50dL. The openings of the first water passage 61 and the third water passage 63 face each other via a slot 97 that penetrates through the sheet gasket 93 in the thickness direction. Therefore, the first water passage 61 is connected to the third water passage 63 via the sheet gasket 93.

As shown in an enlarged manner in Fig. 5, the first water passage 61 and the third water passage 63 are connected by a connecting portion between the first upstream end portion 51uR and the first downstream end portion 50dR via a cooling water pipe 98. An inner peripheral surface of the cooling water pipe 98 defines a communication passage 99 that connects the first water passage 61 provided in the first exhaust pipe 51 and the third water passage 63 provided in the first exhaust manifold 50R. The cooling water flows from the first water passage 61 to the third water passage 63 through the communication passage 99 included in the cooling water passage 25.

The cooling water pipe 98 is disposed around the spiral wound gasket 83. The cooling water pipe 98 is positioned above the spiral wound gasket 83. The cooling water pipe 98 is disposed at a position more distant than the spiral wound gasket 83 from the exhaust passage 22.

One end portion (left end portion in Fig. 5) of the cooling water pipe 98 is inserted in an insertion hole provided in the first exhaust manifold 50R. An O-ring R2 surrounding one end portion of the cooling water pipe 98 is fitted in an annular grove provided at the outer peripheral portion of the cooling water pipe 98. A gap between an outer peripheral surface of the cooling water pipe 98 and an inner peripheral surface of the insertion hole is sealed by the O-ring R2.

On the other hand, the other end portion (right end portion in Fig. 5) of the cooling water pipe 98 is press-fitted in an insertion hole provided in the first exhaust pipe 51. Accordingly, the other end portion of the cooling water pipe 98 is fixed to the first exhaust pipe 51, and a space between the outer peripheral surface of the cooling water pipe 98 and the inner peripheral surface of the insertion hole is sealed.

Fig. 8 is a conceptual diagram showing the entirety of the exhaust passage 22. Hereinafter, the exhaust passage 22 is described with reference to Fig. 5 and Fig. 8.

The exhaust passage 22 includes a plurality of branch passages 66 extending downstream from a plurality of first exhaust ports 43R corresponding to the plurality of first cylinders 31R, respectively, and a first upstream collecting passage 67 extending downstream from each of the first branch passages 66. Similarly, the exhaust passage 22 includes a plurality of second branch passages 64 extending downstream from a plurality of exhaust ports 43L corresponding to the plurality of second cylinders 31L, respectively, and a second upstream collecting passage 65 extending downstream from each of the second branch passages 64. The exhaust passage 22 further includes a downstream collecting passage 68 extending downstream from each of the first upstream collecting passage 67 and the second upstream collecting passage 65.

The first branch passages 66 are defined by the upstream branch portions 53 of the first exhaust manifold 50R. The second branch passages 64 are defined by the upstream branch portions 53 of the second exhaust manifold 50L. The plurality of first branch passages 66 join together inside the first exhaust manifold 50R, and the plurality of second branch passages 64 join together inside the second exhaust manifold 50L. The two exhaust manifolds 50 are disposed inside the V-shaped line V1, so that the first branch passages 66 and the second branch passages 64 are positioned inside the V-shaped line V1.

The first upstream collecting passage 67 is defined by the upstream collecting portion 54 of the first exhaust manifold 50R and one downstream branch portion 55 of the first exhaust pipe 51. The second upstream collecting passage 65 is defined by the upstream collecting portion 54 of the second exhaust manifold 50L and the other downstream branch portion 55 of the first exhaust pipe 51. The first upstream collecting passage 67 and the second upstream collecting passage 65 are positioned inside the V-shaped line V1. The first upstream collecting passage 67 and the second upstream collecting passage 65 join together inside the first exhaust pipe 51. The first upstream collecting passage 67 and the second upstream collecting passage 65 define a Y-shaped passage having a Y shape in a rear view of the exhaust passage 22 together with the downstream collecting passage 68.

The downstream collecting passage 68 extends from the junction of the first upstream collecting passage 67 and the second upstream collecting passage 65 to the exhaust opening 21 open at the propeller 11 through the inside of the casing 13 including the exhaust guide 14 and the oil pan 15. The downstream collecting passage 68 includes a first passage 71 defined by the downstream collecting portion 56 of the first exhaust pipe 51, a second passage 72 defined by the second exhaust pipe 52, a third passage 73 defined by the exhaust guide 14, and a fourth passage 74 defined by the oil pan 15. The second passage 72 includes an approaching portion 75 (refer to Fig. 3) that approaches the crankshaft 33 toward downstream in the flow direction of exhaust gases. The approaching portion 75 is disposed higher than the exhaust guide 14.

Exhaust gases generated in the two cylinder heads 37 are discharged to the two exhaust manifolds 50 disposed inside the V-shaped line V1. Exhaust gases discharged to the two exhaust manifolds 50 flow inside the first exhaust pipe 51 and are purified by the catalyst 57. The exhaust gases purified inside the first exhaust pipe 51 pass through the second exhaust pipe 52, the exhaust guide 14, the oil pan 15, the upper case 16, and the lower case 18 in this order, and are discharged into water from the propeller 11. Accordingly, exhaust gases generated in the plurality of cylinders 31 are discharged into water.

As described above, in the present preferred embodiment, each of the first upstream collecting passage 67 and the second upstream collecting passage 65 are connected just by one downstream collecting passage 68 to the exhaust opening 21 disposed in water. Therefore, a pressure loss of exhaust gases due to branching of the exhaust passage 22 is reduced. Further, a portion from the upstream end 68u of the downstream collecting passage 68 to the downstream end 68d of the downstream collecting passage 68 is disposed outside the cylinder body 36 and the cylinder heads 37, so that without being constrained by the cylinder body 36 and the cylinder heads 37, the flow passage area of the downstream collecting passage 68 increases. Accordingly, the output and fuel consumption of the engine 7 are improved.

In the present preferred embodiment, exhaust gases generated in any of the cylinders 31 are collected at the downstream collecting passage 68. The catalyst 57 that purifies exhaust gases are disposed in the downstream collecting passage 68. Therefore, exhaust gases generated in all cylinders 31 are treated with one catalyst 57. Further, the catalyst 57 is disposed inside the V-shaped line V1, so that as compared with the case where the catalyst 57 is disposed outside the V-shaped line V1, the widths of the engine 7 and the catalyst 57 are reduced.

Further, in the present preferred embodiment, the catalyst 57 is disposed at a height between the upper end of the plurality of first cylinders 31R and the lower end of the plurality of first cylinders 31R. Thus, the catalyst 57 is disposed near the engine 7, exhaust gases having high-temperature pass through the catalyst 57. Therefore, the temperature of the catalyst 57 is raised to a temperature at which the catalyst is highly active in a short period of time when starting the engine 7. Further, the catalyst 57 is disposed at a high position, so that even if water flows back inside the exhaust passage 22, water hardly reaches the catalyst 57.

In the present preferred embodiment, cooling water suctioned into the water pump 24 is guided by the cooling water passage 25 from the water pump 24 to the exhaust passage 22, and then guided by the cooling water passage 25 from the exhaust passage 22 to the engine 7. That is, the exhaust passage 22 is cooled by cooling water before cooling the cylinder heads 37, etc. The members defining the exhaust passage 22 normally have heat capacity smaller than that of the engine 7. Therefore, by supplying low-temperature cooling water to the exhaust passage 22, an increase in temperature of the exhaust passage 22 is reduced.

In the V-type engine described in US 2014322997 A1, for absorbing dimensional errors of the respective components, a floating structure is adopted. In detail, an exhaust pipe includes two upstream end portions connected to two exhaust manifolds, respectively. One upstream end portion is connected to one exhaust manifold via two O-rings, and movable with respect to one exhaust manifold. The other upstream end portion is fixed to the other exhaust manifold, and not movable with respect to the other exhaust manifold.

One upstream end portion of the exhaust pipe is inserted into an insertion hole provided in one exhaust manifold. The space between an outer peripheral surface of the upstream end portion and an inner peripheral surface of the insertion hole is sealed by two O-rings. The O-rings are held in annular grooves provided on the insertion hole. One upstream end portion of the exhaust pipe is movable with respect to one exhaust manifold in a state where the space between the upstream end portion and the insertion hole is sealed by the two O-rings. The position of the exhaust pipe with respect to one exhaust manifold changes according to a cumulative value of dimensional errors.

In the V-type engine described in US 2014322997 A1, by adopting the floating structure, both of securing of sealing performance and absorption of dimensional errors are realized. However, since O-rings are used to seal the connecting portion between the exhaust pipe and the exhaust manifold, the exhaust manifold is required to include the insertion hole into which the upstream end portion of the exhaust pipe is inserted. Further, two annular grooves to hold the two O-rings must be provided on the inner peripheral surface of the insertion hole. Therefore, the structure of the connecting portion becomes complicated.

In the present preferred embodiment, exhaust gases generated in the first cylinders 31R and the second cylinders 31L are collected at the first exhaust pipe 51 via the first exhaust manifold 50R and the second exhaust manifold 50L disposed inside the V-shaped line V1. The elastically deformable spiral wound gasket 83 is disposed between the first exhaust manifold 50R and the first upstream end portion 51uR of the first exhaust pipe 51. The gap between the first exhaust manifold 50R and the first upstream end portion 51uR is sealed by the spiral wound gasket 83. Further, dimensional errors of the first exhaust manifold 50R, etc., are absorbed by elasticity of the spiral wound gasket 83. Therefore, both of securing of sealing performance and absorption of dimensional errors are realized. Further, unlike the case where O-rings are used, the insertion hole and annular grooves are not necessary, so that the structure is prevented from becoming complicated.

In the present preferred embodiment, the second upstream end portion 51uL of the first exhaust pipe 51 is fixed to the second exhaust manifold 50L by bolts B2 as fixing members. The distance between the second exhaust manifold 50L and the second upstream end portion 51uL is maintained constant, so that dimensional errors are hardly absorbed by the connecting portion between the second exhaust manifold 50L and the second upstream end portion 51uL. That is, when dimensional errors occur, the distance between the first exhaust manifold 50R and the first upstream end portion 51uR changes. However, the elastically deformable gasket 83 is disposed between the first exhaust manifold 50R and the first exhaust pipe 51, so that the dimensional errors are absorbed while securing sealing performance. Therefore, while applying a comparatively simple connecting structure to the connecting portion between the second exhaust manifold 50L and the second upstream end portion 51uL, both of securing of sealing performance and absorption of dimensional errors are realized.

In the present preferred embodiment, in the entire region of the first upstream end portion 51uR of the first exhaust pipe 51, the first upstream end portion 51uR is separated from the first exhaust manifold 50R. Therefore, elastic deformation of the spiral wound gasket 83 is not restricted by contact between the first upstream end portion 51uR and the first exhaust manifold 50R. Therefore, the first upstream end portion 51uR is movable with respect to the first downstream end portion 50dR within the elastic region of the spiral wound gasket 83. Accordingly, dimensional errors are reliably absorbed by the spiral wound gasket 83.

In the present preferred embodiment, the spiral wound gasket 83 surrounds the inner cylinder portion 86 provided in the first exhaust manifold 50R. The spiral wound gasket 83 is restricted from moving in the radial directions of the spiral wound gasket 83 by the inner cylinder portion 86. Accordingly, an amount of eccentricity of the spiral wound gasket 83 with respect to the inner cylinder portion 86 is reduced, and the spiral wound gasket 83 is centered.

In the present preferred embodiment, the spiral wound gasket 83 surrounds the solid inner cylinder portion 86. An O-ring is normally lower in heat resistance than the gasket 83. Therefore, when an O-ring is disposed around the inner cylinder portion 86, to cool the O-ring, a passage inside which cooling water flows is provided inside the inner cylinder portion 86. That is, the inner cylinder portion 86 must be hollow. On the other hand, in the case where the spiral wound gasket 83 is used, such a passage is not necessary. That is, the inner cylinder portion 86 may be solid. Therefore, as compared with the case where an O-ring is used, the structure of the inner cylinder portion 86 is simplified.

In the present preferred embodiment, not only the spiral wound gasket 83 but also springs S1 are provided at the connecting portion between the first exhaust manifold 50R and the first exhaust pipe 51. When the first exhaust manifold 50R, etc., expand or contract according to a temperature change, dimensional changes of the first exhaust manifold 50R, etc., are absorbed by the elasticity of the springs S1 and the spiral wound gasket 83. Therefore, even if the dimensions of the first exhaust manifold 50R, etc., change according to a temperature change, excellent sealing performance is secured.

In the present preferred embodiment, exhaust gases that flowed from the first upstream end portion 51uR into the first exhaust pipe 51 and exhaust gases that flowed from the second upstream end portion 51uL into the first exhaust pipe 51 gather in the downstream collecting portion 56 of the first exhaust pipe 51. These exhaust gases are purified by the catalyst 57 disposed in the downstream collecting portion 56. Thus, exhaust gases generated in both of the first cylinders 31R and the second cylinders 31L are collected at one point, so that all exhaust gases are purified by one catalyst 57. Therefore, the number of components is reduced.

In the present preferred embodiment, the first upstream end portion 51uR of the first exhaust pipe 51 is fastened to the first downstream end portion 50dR of the first exhaust manifold 50R by the bolts B1. When dimensional errors are absorbed by the connecting portion between the first exhaust pipe 51 and the first exhaust manifold 50R, and an O-ring is used as a sealing member to seal the connecting portion, normally, the first exhaust pipe 51 and the first exhaust manifold 50R are not fastened by the bolts B1. This is because if the bolts B1 are used, dimensional errors cannot be absorbed by the connecting portion. On the other hand, in the present preferred embodiment, even if the first exhaust pipe 51 and the first exhaust manifold 50R are fastened by the bolts B1, the function of the spiral wound gasket 83 to absorb dimensional errors is not lost. Therefore, as compared with the case where an O-ring is used, the joint strength between the first exhaust pipe 51 and the first exhaust manifold 50R is improved.

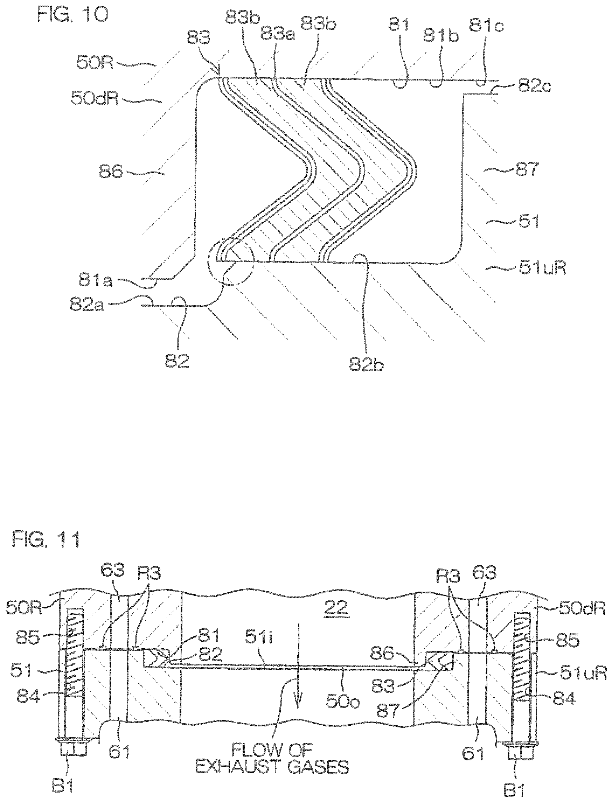

In the present preferred embodiment, a section of the spiral wound gasket 83 at an arbitrary position in the circumferential direction has a V-shaped configuration that opens outward. As shown in Fig. 10, a section of the spiral wound gasket 83 may have a V-shaped configuration that opens inward. As shown in an enlarged manner in Fig. 6, both end surfaces of the spiral wound gasket 83 are entirely in contact with the mating surfaces 81 and 82. On the other hand, in Fig. 10, one end surface (lower end surface in Fig. 10) of the spiral wound gasket 83 is only partially in contact with the mating surface 82 (refer to the circle drawn with an alternate long and short dashed line). Therefore, by shaping the spiral wound gasket 83 so as to have a section having a V-shaped configuration that opens outward, the contact area between the spiral wound gasket 83 and the mating surfaces 81 and 82 increases, and stable sealing performance is secured.

### Other Preferred Embodiments

Although preferred embodiments have been described above, the present teaching is not restricted to the contents of the preferred embodiments and various modifications of the embodiment are possible.

For example, the total number of cylinders 31 provided in the engine 7 is not limited to 8, and may be 6.

In the above-described preferred embodiment, a case where the oil pan 15 is disposed above the upper case 16 is described. However, the oil pan 15 may be disposed inside the upper case 16. In this case, the oil pan 15 may be integral and unitary with the upper case 16.

At least a portion of the exhaust manifold 50 may be integral and unitary with the cylinder head 37. For example, the plurality of upstream branch portions 53 of the exhaust manifold 50 may be integral and unitary with the cylinder head 37, and the upstream collecting portion 54 of the exhaust manifold 50 may be fixed to the cylinder head 37 by fixing members such as bolts.

The outboard motor 6 may include a plurality of catalysts 57. On the contrary, the outboard motor 6 may not include the catalysts 57. Similarly, the outboard motor 6 may not include the water-resistant member 60.

The exhaust sensor (the upstream sensor 58 and the downstream sensor 59) may be provided only upstream of the catalyst 57. The exhaust sensor is not limited to an oxygen concentration sensor, but may be a temperature sensor that detects a temperature of exhaust gases.

The catalyst 57 is not limited to being disposed inside the V-shaped line V1, but may be disposed outside the V-shaped line V1. The position of the catalyst 57 in the up-down direction is not limited to a position between the upper end of the plurality of first cylinders 31R and the lower end of the plurality of first cylinders 31R, but may be a position lower than the lower end of the plurality of first cylinders 31R.

The downstream collecting passage 68 may not include the approaching portion 75 that approaches the crankshaft 33 toward downstream in the flow direction of exhaust gases. In detail, in a case where the exhaust guide 14 is disposed below the first exhaust pipe 51, the second exhaust pipe 52 may be a straight pipe extending from the first exhaust pipe 51 to the exhaust guide 14.

The first water passage 61 provided in the first exhaust pipe 51 and the second water passage 62 provided in the second exhaust pipe 52 may not be connected by the connecting portion between the first exhaust pipe 51 and the second exhaust pipe 52. In detail, two water supply channels to supply cooling water to the first water passage 61 and the second water passage 62, respectively, may be provided in the cooling water passage 25.

In the above-described preferred embodiment, the case where the second exhaust pipe 52 is a member separate from the first exhaust pipe 51 and the exhaust guide 14 is described. However, at least a portion of the second exhaust pipe 52 may be integral and unitary with the exhaust guide 14.

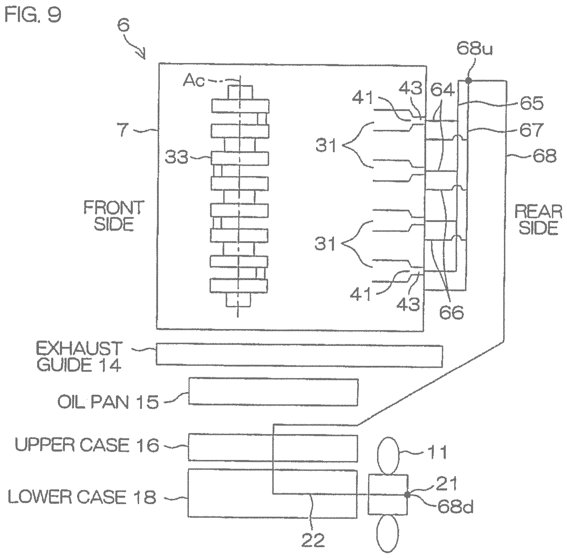

In the above-described preferred embodiment, the case where the downstream collecting passage 68 passes through the insides of the exhaust guide 14 and the oil pan 14 is described. However, the downstream collecting passage 68 may be disposed outside at least one of the exhaust guide 14 and the oil pan 15. For example, as shown in Fig. 9, a portion from the upstream end 68u of the downstream collecting passage 68 to the downstream end 68d of the downstream collecting passage 68 may be disposed outside both of the exhaust guide 14 and the oil pan 15. With this arrangement, the downstream collecting passage 68 is arranged separately from the exhaust guide 14 and the oil pan 15.

The case where the second upstream end portion 51uL of the first exhaust pipe 51 is connected to the second exhaust manifold 50L via the sheet gasket 93 is described above. However, similar to the first upstream end portion 51uR of the first exhaust pipe 51, the second upstream end portion 51uL may be connected to the second exhaust manifold 50L via the spiral wound gasket 83. In this case, dimensional errors are dispersed in two spiral wound gaskets 83, so that even if greater dimensional errors occur, excellent sealing performance is secured.

The case where the first upstream end portion 51uR of the first exhaust pipe 51 is separated from the first exhaust manifold 50R in the entire region of the first upstream end portion 51uR is described above. However, a portion of the first upstream end portion 51uR may be in contact with the first exhaust manifold 50R. In this case, a compression amount of the spiral wound gasket 83 is limited.

The case where the inner cylinder portion 86 surrounded by the spiral wound gasket 83 is provided in the first exhaust manifold 50R is described above. However, the inner cylinder portion 86 may be provided in the first upstream end portion 51uR of the first exhaust pipe 51, or may be omitted. The same applies to the outer cylinder portion 87 surrounding the spiral wound gasket 83.

The case where the inner cylinder portion 86 provided in the first exhaust manifold 50R is solid, and a passage in which cooling water flows is not provided inside the inner cylinder portion 86, is described above. However, a passage in which cooling water flows may be provided inside the inner cylinder portion 86.

The case where the springs S1 are interposed between the head portions of the bolts B1 and the first upstream end portion 51uR of the first exhaust pipe 51 is described above. However, as shown in Fig. 11, the springs S1 may be omitted.

The case where the cooling water pipe 98 is disposed above the spiral wound gasket 83 is described above. However, the cooling water pipe 98 may be disposed below the spiral wound gasket 83 or may be disposed lateral to the spiral wound gasket 83. That is, the cooling water pipe 98 may be disposed at any position as long as the position is around the spiral wound gasket 83.

In the above-described preferred embodiment, the case where the first water passage 61 and the third water passage 63 do not open at the mating surface 82 and the mating surface 81 as shown in Fig. 6 is described. However, as shown in Fig. 11, the first water passage 61 and the third water passage 63 may be open at the mating surface 82 and the mating surface 81, and may face each other via a space between the mating surface 82 and the mating surface 81.

In Fig. 11, two O-rings R3 surrounding the exhaust passage 22 at positions outward from the spiral wound gasket 83 are sandwiched by the first exhaust manifold 50R and the first exhaust pipe 51. The openings of the first water passage 61 and the third water passage 63 are positioned between the two O-rings R3 in radial directions. Accordingly, water is prevented from leaking from between the first exhaust manifold 50R and the first exhaust pipe 51. Further, with this arrangement, the cooling water pipe 98 shown in Fig. 5 can be omitted.

The case where the exhaust passage 22 does not pass through the cylinder heads 37 and the cylinder body 36 in a region from the first exhaust pipe 51 to the exhaust guide 14 is described above. However, the exhaust passage 22 may extend from the first exhaust pipe 51 to the exhaust guide 14 via the cylinder heads 37 and the cylinder body 36.

The case where exhaust gases generated in the first cylinders 31R and the second cylinders 31L gather in the first exhaust pipe 51 is described above. However, a passage in which exhaust gases generated in the first cylinder 31R flow and a passage in which exhaust gases generated in the second cylinder 31L flow may be provided independently in the first exhaust pipe 51. In this case, the two passages preferably join together at the exhaust guide 14. In addition, one catalyst 57 may be disposed in both passages. For example, a penetrating portion that connects the two passages may be provided in a partition that partitions the two passages, and from this penetrating portion, the catalyst 57 may project to both of the passages.

The spiral wound gasket 83 may include at least one of an outer ring and an inner ring in addition to the gasket main body including the hoop 83a and the filler 83b.

Also, features of two or more of the various preferred embodiments described above may be combined.

## Claims

1. An outboard motor (6) comprising:
an engine (7) that includes a V-shaped cylinder body (36) disposed along a V-shaped line (V1) defined by a first plane (PR) passing through centerlines of a plurality of first cylinders (31R) and a second plane (PL) passing through centerlines of a plurality of second cylinders (31L), and two cylinder heads (37) defining a plurality of combustion chambers (42);
an engine support member (14) that supports the cylinder body (36) of the engine (7); and
an exhaust passage (22) configured to discharge exhaust gases generated in the engine (7) into water from an exhaust opening (21), wherein
the exhaust passage (22) includes
a plurality of first branch passages (66) that are connected to the plurality of first cylinders (31R), respectively, and disposed inside the V-shaped line (V1),
a plurality of second branch passages (64) that are connected to the plurality of second cylinders (31L), respectively, and disposed inside the V-shaped line (V1),
a first upstream collecting passage (67) connected to each of the plurality of first branch passages (66),
a second upstream collecting passage (65) connected to each of the plurality of second branch passages (64), and
a downstream collecting passage (68) which includes an upstream end (68u) connected to each of the first upstream collecting passage (67) and the second upstream collecting passage (65) and disposed higher than the engine support member (14), and a downstream end (68d) connected to and positioned at the exhaust opening (21) that is provided in a propeller (11) which is configured to be disposed in water, **characterized in that** the downstream collecting passage (68) from the upstream end (68u) to the downstream end (68d) is disposed outside the cylinder heads (37).

2. The outboard motor (6) according to Claim 1, further comprising a catalyst (57) disposed in the downstream collecting passage (68).

3. The outboard motor (6) according to Claim 2, wherein the catalyst (57) is disposed inside the V-shaped line (V1).

4. The outboard motor (6) according to Claim 2 or 3, wherein the catalyst (57) is disposed at a height lower than an upper end of the plurality of first cylinders (31R) and higher than a lower end of the plurality of first cylinders (31R).

5. The outboard motor (6) according to any one of Claims 1 to 4, wherein
the engine (7) further includes a crankshaft (33) rotatable around a rotation axis (Ac) extending in an up-down direction, and
the downstream collecting passage (68) includes an approaching portion (75) that approaches the crankshaft (33) while extending downstream with respect to a flow direction of exhaust gases.

6. The outboard motor (6) according to any one of Claims 1 to 5, further comprising:
a cooling water passage (25) configured to guide the cooling water to cool the outboard motor (6); and
a first exhaust pipe (51) and a second exhaust pipe (52) that define portions of the downstream collecting passage (68) and include connecting portions that are connected to each other, wherein
the cooling water passage (25) includes a first water passage (61) provided in the first exhaust pipe (51) and a second water passage (62) provided in the second exhaust pipe (52), and
the first water passage (61) and the second water passage (62) are connected to each other at the connecting portions of the first exhaust pipe (51) and the second exhaust pipe (52).

7. The outboard motor (6) according to Claim 6, further comprising:
a water pump (24) that feeds cooling water into the cooling water passage (25), wherein the cooling water passage (25) extends from the water pump (24) to the engine (7) via the exhaust passage (22).

8. The outboard motor (6) according to any one of Claims 1 to 7, wherein
the engine support member (14) defines a portion of the downstream collecting passage (68).

9. The outboard motor (6) according to any one of Claims 1 to 7, wherein
the portion from the upstream end (68u) to the downstream end (68d) of the downstream collecting passage (68) is disposed outside the engine (7) support member.

10. The outboard motor (6) according to any one of Claims 1 to 9, further comprising:
an oil pan (15) disposed below the engine (7), wherein
the portion from the upstream end (68u) to the downstream end (68d) of the downstream collecting passage (68) is disposed outside the oil pan (15).

11. The outboard motor (6) according to any one of Claims 1 to 10, further comprising:
a first exhaust manifold (50R) that defines a portion of the exhaust passage (22), and is connected to the plurality of first cylinders (31R) and disposed inside the V-shaped line (V1);
a second exhaust manifold (50L) that defines a portion of the exhaust passage (22), and is connected to the plurality of second cylinders (31L) and disposed inside the V-shaped line (V1);
an exhaust pipe (51) that includes a first upstream end portion (51uR) into which exhaust gases, discharged from the plurality of first cylinders (31R) to the first exhaust manifold (50R), flow, and a second upstream end portion (51uL) into which exhaust gases, discharged from the plurality of second cylinders (31L) to the second exhaust manifold (50L), flow, and defines a portion of the exhaust passage (22); and
a spiral wound gasket (83) that seals a gap between the first exhaust manifold (50R) and the first upstream end portion (51uR).

12. The outboard motor (6) according to Claim 11, further comprising a fixing member (B2) that maintains constant a distance between the second exhaust manifold (50L) and the second upstream end portion (51uL) by fixing the second upstream end portion (51uL) to the second exhaust manifold (50L).

13. The outboard motor (6) according to Claim 11 or 12, further comprising an inner cylinder portion (86) provided in one of the first exhaust manifold (50R) and the first upstream end portion (51uR), wherein
the spiral wound gasket (83) surrounds the inner cylinder portion (86).

14. The outboard motor (6) according to any one of Claims 11 to 13, further comprising:
a spring (S1); and
a bolt (B1) that fastens the first exhaust manifold (50R) and the first upstream end portion (51uR) via the spring (S1).

15. The outboard motor (6) according to any one of Claims 11 to 14, further comprising: a cooling water pipe (98) configured to guide the cooling water between a water passage (63) provided in the first exhaust manifold (50R) and a water passage (61) provided in the exhaust pipe (51).

## Patentansprüche

1. Außenbordmotor (6), umfassend:
einen Motor (7), der einen V-förmigen Zylinderkörper (36) beinhaltet, der entlang einer V-förmigen Linie (V1) angeordnet ist, die durch eine erste Ebene (PR) definiert ist, welche durch die Mittellinien einer Vielzahl von ersten Zylindern (31R) verläuft, und eine zweite Ebene (PL), die durch die Mittellinien einer Vielzahl von zweiten Zylindern (31L) verläuft, und zwei Zylinderköpfe (37), die eine Vielzahl von Brennkammern (42) definieren;
ein Motorlagerelement (14), das den Zylinderkörper (36) des Motors (7) lagert; und
einen Abgaskanal (22), der dazu konfiguriert ist, Abgase, die in dem Motor (7) erzeugt werden, aus einer Abgasöffnung (21) in Wasser auszustoßen, wobei
der Abgaskanal (22) beinhaltet
eine Vielzahl von ersten Zweigkanälen (66), die jeweils mit der Vielzahl von ersten Zylindern (31R) verbunden und in der V-förmigen Linie (V1) angeordnet sind,
eine Vielzahl von zweiten Zweigkanälen (64), die jeweils mit der Vielzahl von zweiten Zylindern (31L) verbunden und in der V-förmigen Linie (V1) angeordnet sind,
einen ersten stromaufwärtigen Sammelkanal (67), der mit jedem der Vielzahl von ersten Zweigkanälen (66) verbunden ist,
einen zweiten stromaufwärtigen Sammelkanal (65), der mit jedem der Vielzahl von zweiten Zweigkanälen (64) verbunden ist,
einen stromabwärtigen Sammelkanal (68), der ein stromaufwärtiges Ende (68u) beinhaltet, das jeweils mit dem ersten stromaufwärtigen Sammelkanal (67) und dem zweiten stromaufwärtigen Sammelkanal (65) verbunden und höher als das Motorlagerelement (14) angeordnet ist, und ein stromabwärtiges Ende (68d) das mit der Abgasöffnung (21) verbunden und daran positioniert ist und das in einer Schraube (11) angeordnet ist, die dazu konfiguriert ist, im Wasser angeordnet zu werden,
**dadurch gekennzeichnet, dass** der stromabwärtige Sammelkanal (68) von dem stromaufwärtigen Ende (68u) bis zu dem stromabwärtigen Ende (68d) außerhalb der Zylinderköpfe (37) angeordnet ist.

2. Außenbordmotor (6) nach Anspruch 1, des Weiteren umfassend einen Katalysator (57), der in dem stromabwärtigen Sammelkanal (68) angeordnet ist.

3. Außenbordmotor (6) nach Anspruch 2, wobei der Katalysator (57) in der V-förmigen Linie (V1) angeordnet ist.

4. Außenbordmotor (6) nach Anspruch 2 oder 3, wobei der Katalysator (57) niedriger als ein oberes Ende der Vielzahl von ersten Zylindern (31R) und höher als ein unteres Ende der Vielzahl von ersten Zylindern (31R) angeordnet ist.

5. Außenbordmotor (6) nach einem der Ansprüche 1 bis 4, wobei
der Motor (7) des Weiteren eine Kurbelwelle (33) beinhaltet, die um eine Drehachse (Ac) drehbar ist, die sich in einer Oben-Unten-Richtung erstreckt, und
der stromabwärtige Sammelkanal (68) einen Annäherungsabschnitt (75) beinhaltet, der sich der Kurbelwelle (33) annähert, während er sich bezüglich einer Strömungsrichtung der Abgase nach unten erstreckt.

6. Außenbordmotor (6) nach einem der Ansprüche 1 bis 5, des Weiteren umfassend:
einen Kühlwasserkanal (20), der dazu konfiguriert ist, das Kühlwasser zum Kühlen des Außenbordmotors (6) zu führen; und
ein erstes Abgasrohr (51) und ein zweites Abgasrohr (52), die Abschnitte des stromabwärtigen Sammelkanals (68) definieren und Verbindungsabschnitte enthalten, die miteinander verbunden sind, wobei
der Kühlwasserkanal (25) einen ersten Wasserkanal (61) beinhaltet, der in dem ersten Abgasrohr (51) angeordnet ist, und einen zweiten Wasserkanal (62), der in dem zweiten Abgasrohr (52) angeordnet ist, und
der erste Wasserkanal (61) und der zweite Wasserkanal (62) miteinander an den Verbindungsabschnitten des ersten Abgasrohres (51) und des zweiten Abgasrohres (52) verbunden sind.

7. Außenbordmotor (6) nach Anspruch 6, des Weiteren umfassend:
eine Wasserpumpe (24), die Kühlwasser in den Kühlwasserkanal (25) einspeist, wobei sich der Kühlwasserkanal (25) von der Wasserpumpe (94) zu dem Motor (7) über den Abgaskanal (22) erstreckt.

8. Außenbordmotor (6) nach einem der Ansprüche 1 bis 7, wobei
das Motorlagerelement (14) einen Abschnitt des stromabwärtigen Sammelkanals (68) definiert.

9. Außenbordmotor (6) nach einem der Ansprüche 1 bis 7, wobei
der Abschnitt von dem stromaufwärtigen Ende (68u) zu dem stromabwärtigen Ende (68d) des stromabwärtigen Sammelkanals (68) außerhalb des Lagerelements des Motors (7) angeordnet ist.

10. Außenbordmotor (6) nach einem der Ansprüche 1 bis 9, des Weiteren umfassend:
eine Ölwanne (15), die unter dem Motor (7) angeordnet ist, wobei
der Abschnitt von dem stromaufwärtigen Ende (68u) zu dem stromabwärtigen Ende (68d) des stromabwärtigen Sammelkanals (68) außerhalb der Ölwanne (15) angeordnet ist.

11. Außenbordmotor (6) nach einem der Ansprüche 1 bis 10, des Weiteren umfassend:
einen ersten Abgaskrümmer (50R), der einen Abschnitt des Abgaskanals (22) definiert und mit der Vielzahl von ersten Zylindern (31R) verbunden und in der V-förmigen Linie (V1) angeordnet ist;
einen zweiten Abgaskrümmer (50R), der einen Abschnitt des Abgaskanals (22) definiert und mit der Vielzahl von zweiten Zylindern (31L) verbunden und in der V-förmigen Linie (V1) angeordnet ist;
ein Abgasrohr (51), das einen ersten stromaufwärtigen Endabschnitt (51uR) beinhaltet, in den Abgase, die von der Vielzahl von ersten Zylindern (31R) zu dem ersten Abgaskrümmer (50R) ausgestoßen werden, strömen, und einen zweiten stromaufwärtigen Endabschnitt (51uL), in den Abgase, die von der Vielzahl von zweiten Zylindern (31L) zu dem zweiten Abgaskrümmer (50L) ausgestoßen werden, fließen, und das einen Abschnitt des Abgaskanals (22) definiert; und
eine Spiraldichtung (83), die einen Spalt zwischen dem ersten Abgaskrümmer (50R) und dem ersten stromaufwärtigen Endabschnitt (51uR) abdichtet.

12. Außenbordmotor (6) nach Anspruch 11, des Weiteren umfassend ein Befestigungselement (B2) das einen Abstand zwischen dem zweiten Abgaskrümmer (50L) und dem zweiten stromaufwärtigen Endabschnitt (51uL) durch Fixieren des zweiten stromaufwärtigen Endabschnitts (51uL) an dem zweiten Abgaskrümmer (50L) konstant hält.

13. Außenbordmotor (6) nach Anspruch 11 oder 12, des Weiteren umfassend einen inneren Zylinderabschnitt (86), der in einem aus dem ersten Abgaskrümmer (50R) und dem ersten stromaufwärtigen Endabschnitt (51uR) angeordnet ist, wobei
die Spiraldichtung (83) den inneren Zylinderabschnitt (86) umgibt.

14. Außenbordmotor (6) nach einem der Ansprüche 11 bis 13, des Weiteren umfassend:
eine Feder (S1); und
eine Schraube (B1), welche den ersten Abgaskrümmer (50r) und den ersten stromaufwärtigen Endabschnitt (51uR) über die Feder (S1) befestigt.

15. Außenbordmotor (6) nach einem der Ansprüche 11 bis 14, des Weiteren umfassend:
ein Kühlwasserrohr (98), das dazu konfiguriert ist, das Kühlwasser zwischen einem Wasserkanal (63), der in dem ersten Abgaskrümmer (50R) vorgesehen ist, und einem Wasserkanal (61), der in dem Abgasrohr (51) vorgesehen ist, zu führen.

## Revendications

1. Moteur hors-bord (6) comprenant :
un moteur (7) qui comprend un corps de cylindres en forme de V (36) disposé le long d'une ligne en forme de V (V1) définie par un premier plan (PR) traversant les axes d'une pluralité de premiers cylindres (31R) et un second plan (PL) passant à travers les axes d'une pluralité de seconds cylindres (31L), et deux culasses (37) définissant une pluralité de chambres de combustion (42) ;
un élément de support de moteur (14) qui supporte le corps de cylindres (36) du moteur (7) ; et
un passage d'échappement (22) configuré pour évacuer dans l'eau les gaz d'échappement générés dans le moteur (7) à partir d'une ouverture d'échappement (21), dans lequel
le passage d'échappement (22) comprend
une pluralité de premiers passages de dérivation (66) qui sont connectés à la pluralité de premiers cylindres (31R), respectivement, et disposés à l'intérieur de la ligne en forme de V (V1),
une pluralité de seconds passages de dérivation (64) qui sont connectés à la pluralité de seconds cylindres (31L), respectivement, et disposés à l'intérieur de la ligne en forme de V (V1),
un premier passage de collecte amont (67) connecté à chacun de la pluralité de premiers passages de dérivation (66),
un second passage de collecte amont (65) connecté à chacun de la pluralité de seconds passages de dérivation (64), et
un passage de collecte aval (68) qui comprend une extrémité amont (68u) connectée à chacun du premier passage de collecte amont (67) et du second passage de collecte amont (65) et disposée plus haut que l'élément de support de moteur (14), et une extrémité aval (68d) connectée à et positionnée au niveau de l'ouverture d'échappement (21) qui est prévue dans une hélice (11) qui est configurée pour être disposée dans l'eau,
**caractérisé en ce que** le passage de collecte aval (68) à partir de l'extrémité amont (68u) jusqu'à l'extrémité aval (68d) est disposé à l'extérieur des culasses (37).

2. Moteur hors-bord (6) selon la revendication 1, comprenant en outre un catalyseur (57) disposé dans le passage de collecte aval (68).

3. Moteur hors-bord (6) selon la revendication 2, dans lequel le catalyseur (57) est disposé à l'intérieur de la ligne en forme de V (V1).

4. Moteur hors-bord (6) selon la revendication 2 ou 3, dans lequel le catalyseur (57) est disposé à une hauteur inférieure à une extrémité supérieure de la pluralité de premiers cylindres (31R) et supérieure à une extrémité inférieure de la pluralité de premiers cylindres (31R).

5. Moteur hors-bord (6) selon l'une quelconque des revendications 1 à 4, dans lequel le moteur (7) comprend en outre un vilebrequin (33) pouvant tourner autour d'un axe de rotation (Ac) s'étendant dans une direction haut-bas, et
le passage de collecte aval (68) comprend une partie d'approche (75) qui s'approche du vilebrequin (33) tout en s'étendant vers l'aval par rapport à une direction d'écoulement de gaz d'échappement.

6. Moteur hors-bord (6) selon l'une quelconque des revendications 1 à 5, comprenant en outre :
un passage d'eau de refroidissement (25) configuré pour guider l'eau de refroidissement afin de refroidir le moteur hors-bord (6) ; et
un premier tuyau d'échappement (51) et un second tuyau d'échappement (52) qui définissent des parties du passage de collecte aval (68) et comprennent des parties de connexion qui sont connectées les unes aux autres, dans lequel le passage d'eau de refroidissement (25) comprend un premier passage d'eau (61) prévu dans le premier tuyau d'échappement (51) et un second passage d'eau (62) prévu dans le second tuyau d'échappement (52), et
le premier passage d'eau (61) et le second passage d'eau (62) sont connectés l'un à l'autre au niveau des parties de connexion du premier tuyau d'échappement (51) et du second tuyau d'échappement (52).

7. Moteur hors-bord (6) selon la revendication 6, comprenant en outre :
une pompe à eau (24) qui alimente l'eau de refroidissement jusque dans le passage d'eau de refroidissement (25), dans lequel le passage d'eau de refroidissement (25) s'étend de la pompe à eau (24) jusqu'au moteur (7) via le passage d'échappement (22).

8. Moteur hors-bord (6) selon l'une quelconque des revendications 1 à 7, dans lequel l'élément de support de moteur (14) définit une partie du passage de collecte aval (68).

9. Moteur hors-bord (6) selon l'une quelconque des revendications 1 à 7, dans lequel la partie allant de l'extrémité amont (68u) à l'extrémité aval (68d) du passage de collecte aval (68) est disposée à l'extérieur de l'élément de support du moteur (7).

10. Moteur hors-bord (6) selon l'une quelconque des revendications 1 à 9, comprenant en outre :
un carter d'huile (15) disposé sous le moteur (7), dans lequel
la partie allant de l'extrémité amont (68u) à l'extrémité aval (68d) du passage de collecte aval (68) est disposée à l'extérieur du carter d'huile (15).

11. Moteur hors-bord (6) selon l'une quelconque des revendications 1 à 10, comprenant en outre :
un premier collecteur d'échappement (50R) qui définit une partie du passage d'échappement (22), et est connecté à la pluralité de premiers cylindres (31R) et disposé à l'intérieur de la ligne en forme de V (V1) ;
un second collecteur d'échappement (50L) qui définit une partie du passage d'échappement (22), et est connecté à la pluralité de second cylindres (31L) et disposé à l'intérieur de la ligne en forme de V (V1) ;
un tuyau d'échappement (51) qui comprend une première partie d'extrémité amont (51uR) dans laquelle les gaz d'échappement évacués depuis la pluralité de premiers cylindres (31R) s'écoulent vers le premier collecteur d'échappement (50R), et une seconde partie d'extrémité amont (51uL) dans laquelle les gaz d'échappement évacués depuis la pluralité de seconds cylindres (31L) s'écoulent vers le second collecteur d'échappement (50L), et définit une partie du passage d'échappement (22) ; et
un joint d'étanchéité enroulé en spirale (83) qui étanchéifie un espace entre le premier collecteur d'échappement (50R) et la première partie d'extrémité amont (51uR).

12. Moteur hors-bord (6) selon la revendication 11, comprenant en outre un élément de fixation (B2) qui maintient constante une distance entre le second collecteur d'échappement (50L) et la seconde partie d'extrémité amont (51uL) en fixant la seconde partie d'extrémité amont (51uL) au second collecteur d'échappement (50L).

13. Moteur hors-bord (6) selon la revendication 11 ou 12, comprenant en outre une partie de cylindre interne (86) prévue dans l'un du premier collecteur d'échappement (50R) et de la première partie d'extrémité amont (51uR), dans lequel
le joint d'étanchéité enroulé en spirale (83) entoure la partie de cylindre interne (86).

14. Moteur hors-bord (6) selon l'une quelconque des revendications 11 à 13, comprenant en outre :
un ressort (S1) ; et
un boulon (B1) qui fixe le premier collecteur d'échappement (50R) et la première partie d'extrémité amont (51uR) via le ressort (S1).

15. Moteur hors-bord (6) selon l'une quelconque des revendications 11 à 14, comprenant en outre : un tuyau d'eau de refroidissement (98) configuré pour guider l'eau de refroidissement entre un passage d'eau (63) prévu dans le premier collecteur d'échappement (50R) et un passage d'eau (61) prévu dans le tuyau d'échappement (51).
